# EUROPEAN PATENT APPLICATION

(11) **EP 2 096 138 A1**
(43) Date of publication of application: **02.09.2009**
(21) Application number: 07850681.3
(22) Date of filing: 11.12.2007
(51) Int. Cl.: C08L 23/08, B32B 27/32, C08J 3/03, C08K 5/05, C08K 5/16, C08K 5/21, C08L 23/24

(54) **AQUEOUS EMULSION OF OLEFIN COPOLYMER**

(30) Priority: 15.12.2006 JP 2006337908
(71) Applicant: Sumika Chemtex Company, Limited, Osaka-shi, Osaka 554-8558 (JP)
(72) Inventor: MAKINO, Shigeto, Miki-shi Hyogo 673-1117 (JP); NAGANO, Masashi, Sakai-shi Osaka 599-8121 (JP)
(74) Representative: Duckworth, Timothy John
(86) International application number: PCT/JP2007/074193
(87) International publication number: WO 2008/072760

(57) **Abstract**

An aqueous emulsion comprising an olefin-based copolymer comprising structural units derived from an α-olefin and/or ethylene and structural units derived from a vinyl compound having a substituent, an emulsifier and a compound having 1 to 13 carbon atoms, wherein the compound having 1 to 13 carbon atoms has a hydroxyl group, an amino group, or both a hydroxyl group and an amino group, and the compoud having 1 to 13 carbon atoms has, in the molecule thereof, at least two hydrogen atoms derived from a hydroxyl group or an amino group.

## Description

### TECHNICAL FIELD

The present invention relates to an aqueous emulsion and so on which contain an olefin-based copolymer.

### BACKGROUND ART

Conventionally known olefin-based copolymers include olefin-based copolymers containing structural units derived from an α-olefin and/or ethylene and structural units derived from a vinyl compound having a bulky substrate, such as vinylcyclohexane (patent document 1) and modified olefin-based copolymers obtained by graft-polymerizing an alkenyl aromatic hydrocarbon and/or an unsaturated carboxylic acid to the foregoing copolymers (patent document 2) . It is disclosed that the foregoing copolymers and the modified products obtained therefrom are excellent in adhesiveness to polypropylene, which is adhesion resistant.
Moreover, patent documents 3 and 4 disclose that an aqueous emulsion which contains such a copolymer and/or its modified product as a dispersoid having been dispersed in water by the action of an emulsifier gives a cured product excellent in shapability, heat resistance, solvent resistance, mechanical properties and adhesiveness when water is removed from the aqueous emulsion and dried, and that the cured product can be used as a primer for painting, a binder for painting, a binder for printing and an adhesive.
[Patent Document 1] JP-A 2003-160621
[Patent Document 2] JP-A 2003-82028
[Patent Document 3] JP-A 2006-124535
[Patent Document 4] JP-A 2005-320400

### DISCLOSURE OF THE INVENTION

Cured products obtained by drying such an aqueous emulsion are opaque films, and therefore there is a problem that when a colored cured product is obtained by mixing the emulsion with a pigment or the like, the color is to be restricted.

An object of the present invention is to provide an aqueous emulsion which gives a transparent cured product.

The present inventors found out that an aqueous emulsion which is the aforesaid aqueous emulsion further containing a compound of 1 to 13 carbon atoms which has a hydroxyl group and/or an amino group gives a transparent cured product.

The present invention provides the following [1] to [11].
[1] An aqueous emulsion comprising an olefin-based copolymer comprising structural units derived from an α-olefin and/or ethylene and structural units derived from a vinyl compound (I) having a substituent R, an emulsifier and a compound having 1 to 13 carbon atoms, wherein the compound having 1 to 13 carbon atoms has a hydroxyl group, an amino group, or both a hydroxyl group and an amino group, and the compound having 1 to 13 carbon atoms has, in the molecule thereof, at least two hydrogen atoms derived from a hydroxyl group or an amino group:

   CH₂=CH-R (I)

   wherein in formula (I), R represents a secondary alkyl group, a tertiary alkyl group, or an alicyclic hydrocarbon group.
[2] The aqueous emulsion according to [1], wherein the olefin-based copolymer is an olefin-based copolymer further comprises structural units derived from an unsaturated carboxylic acid compound.
[3] The aqueous emulsion according to [1], wherein the compound having 1 to 13 carbon atoms is a urea compound, glycerol, 1-methyl-2-pyrrolidone, or diethylenetriamine.
[4] The aqueous emulsion according to [3], wherein the urea compound is a compound represented by the following formula (III): 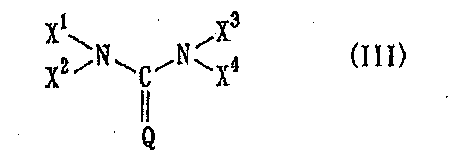 wherein Q represents an oxygen atom or a sulfur atom; X¹, X², X³ and X⁴ each independently represent a hydrogen atom, a straight chain alkyl group having 1 to 6 carbon atoms, a branched chain alkyl group having 3 to 6 carbon atoms, or an alkylene group having 1 to 6 carbon atoms composed of X¹ or X² linked with X³ or X⁴, and a hydrogen atom of an alkyl group and a hydrogen atom of an alkylene group each may have been substituted with a hydroxyl group.
[5] The aqueous emulsion according to [1], wherein the emulsifier is at least one emulsifier selected from the group consisting of a water-soluble acrylic resin containing structural units derived from an α,β-unsaturated carboxylic acid, structural units derived from vinyl acrylate and structural units derived from a (meth)acrylic acid ester, polyoxyethylene polyoxypropylene block copolymers and polyoxyethylene alkyl ether.
[6] The aqueous emulsion according to [1], wherein the dispersoid composed of the olefin-based copolymer having structural units derived from an α-olefin and/or ethylene and structural units derived from a vinyl compound (I) having a substituent R and the emulsifier has a volume-based median diameter of 0.01 to 1 µm.
[7] The aqueous emulsion according to any one of [1] to [6], wherein the vinyl compound (I) is vinylcyclohexane.
[8] A cured product obtained by drying the aqueous emulsion according to [1].
[9] A layered article obtained by laminating an adherend selected from the group consisting of a wood-based material, a cellulosic material, a plastic material, a ceramic material and a metallic material and the cured product according to [8].
[10] The layered article according to [9], wherein the plastic material is polyolefin.
[11] The layered article according to [9], wherein the plastic material is polypropylene.

### MODE FOR CARRYING OUT THE INVENTION

The present invention is described in detail below.

The olefin-based copolymer to be used for the present invention contains structural units derived from an α-olefin and/or ethylene and structural units derived from a vinyl compound (I) having a substituent R:

CH₂=CH-R (I)

wherein in formula (I), R represents a secondary alkyl group, a tertiary alkyl group, or an alicyclic hydrocarbon group.

The secondary alkyl group is preferably a secondary alkyl group having 3 to 20 carbon atoms. The tertiary alkyl group is preferably a tertiary alkyl group having 4 to 20 carbon atoms. The alicyclic hydrocarbon group is preferably an alicyclic hydrocarbon group having a 3- to 16-member ring.

The substituent R is preferably an alicyclic hydrocarbon group having 3 to 20 carbon atoms having a 3- to 10-member ring or a tertiary alkyl groups having 4 to 20 carbon atoms are more preferable as the substituent R.

Specific examples of the vinyl compound (I) in which the substituent R is a secondary alkyl group include 3-methyl-1-butene, 3-methyl-1-pentene, 3-methyl-1-hexene, 3-methyl-1-heptene, 3-methyl-1-octene, 3,4-dimethyl-1-pentene, 3,4-dimethyl-1-hexene, 3,4-dimethyl-1-heptene, 3,4-dimethyl-1-octene, 3,5-dimethyl-1-hexene, 3,5-dimethyl-1-heptene, 3,5-dimethyl-1-octene, 3,6-dimethyl-1-heptene, 3,6-dimethyl-l-octene, 3,7-dimethyl-l-octene, 3,4,4-trimethyl-1-pentene, 3,4,4-trimethyl-1-hexene, 3,4,4-trimethyl-1-heptene, and 3,4;4-trimethyl-1-octene.

Specific examples of the vinyl compound (I) in which the substituent R is a tertiary alkyl group include 3,3-dimethyl-1-butene, 3,3-dimethyl-1-pentene, 3,3-dimethyl-1-hexene, 3,3-dimethyl-1-heptene, 3,3-dimethyl-1-octene, 3,3,4-trimethyl-1-pentene, 3,3,4-trimethyl-1-hexene, 3,3,4-trimethyl-1-heptene, and 3,3,4-trimethyl-1-octene.

Specific examples of the vinyl compound (I) in which the substituent R is a alicyclic hydrocarbon group include vinyl compounds in which the substituent R is a cycloalkyl group, such as vinylcyclopropane, vinylcyclobuntane, vinylcyclopentane, vinylcyclohexane, vinylcycloheptane, and vinylcyclooctane; 5-vinyl-2-norbornene, 1-vinyladamantane, and 4-vinyl-1-cyclohexene.

Preferable examples of the vinyl compound (I) are 3-methyl-1-butene, 3-methyl-l-pentene, 3-methyl-1-hexene, 3,4-dimethyl-1-pentene, 3,5-dimethyl-1-hexene, 3,4,4-trimethyl-1-pentene, 3,3-dimethyl-1-butene, 3,3-dimethyl-1-pentene, 3,3,4-trimethyl-1-pentene, vinylcyclopentane, vinylcyclohexane, vinylcycloheptane, vinylcyclooctane, and 5-vinyl-2-norbornene; more preferable examples are 3-methyl-1-butene, 3-methyl-1-pentene, 3,4-dimethyl-1-pentene, 3,3-dimethyl-1-butene, 3,3,4-trimethyl-1-pentene, vinylcyclohexane, and vinyl norbornene; and even more preferable examples are 3,3-dimethyl-1-butene and vinylcyclohexane. The most preferable vinyl compound (I) is vinylcyclohexane.

The content of the structural units of the vinyl compound (I) for the olefin-based copolymer to be used in the present invention is usually 5 to 40 mol%, preferably 10 to 30 mol%, and more preferably 10 to 20 mol% relative to 100 mol% of all the structural units, which constitute the olefin-based copolymer.

It is preferable that the content of the structural units of the vinyl compound (I) be 5 to 40 mol% because this leads to a tendency that a resulting cured product will have an improved adhesiveness.

The content of the structural units of the vinyl compound (I) can be determined using a ¹H-NMR spectrum or a ¹³C-NMR spectrum.

The straight chain α-olefin to be used in the present invention is usually a straight chain α-olefin having 3 to 20 carbon atoms including propylene, and specific examples thereof include straight chain olefins such as propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nanodecene, and 1-eicosene. Among these, propylene, 1-butene, 1-pentene, 1-hexene, and 1-octene are preferable, and propylene is used more preferably.

In the olefin-based copolymer to be used in the present invention, the sum total content of the structural unit derived from ethylene and the structural units derived from a straight chain α-olefin is usually 95 to 60 mol%, preferably 90 to 70 mol%, and more preferably 90 to 80 mol% relative to 100 mol% of all the structural units which constitute the olefin-based copolymer.

Ethylene is suitable as the "ethylene and/or a straight chain α-olefin".

The olefin-based copolymer to be used in the present invention is a product which is obtained by copolymerizing ethylene and/or a straight chain α-olefin with a vinyl compound (I), and an addition polymerizable monomer may further be copolymerized.

The addition polymerizable monomer as used herein is a monomer other than ethylene, straight chain α-olefins and vinyl compounds (I) which is addition polymerizable with ethylene, a straight chain α-olefin and a vinyl compound (I). The number of carbon atoms in the monomer is usually about 3 to about 20.

Specific examples of the addition copolymerizable monomer include cycloolefins, vinylidene compounds represented by the following formula (II) 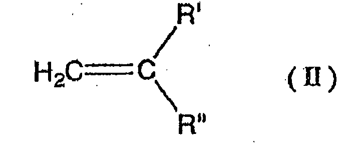 wherein in the formula (II), R' and R" each independently represent a straight chain alkyl group having 1 to about 18 carbon atoms, a branched chain alkyl group having 3 to about 18, a cyclic alkyl group having 3 to about 18 carbon atoms, or a halogen atom, etc., diene compounds, vinylic halides, alkyl acid vinyl, vinyl ethers, and acrylonitriles.

Examples of the cycloolefin include cyclobutene, cyclopentene, cyclohexene, cyclooctane, 3-methylcyclopentene, 4-methylcyclopentene, 3-methylcyclohexene, 2-norbornene, 5-methyl-2-norbornene, 5-ethyl-2-norbornene, 5-butyl-2-norbornene, 5-phenyl-2-norbornene, 5-benzyl-2-norbornene, 2-tetracyclododecene, 2-tricyclodecene, 2-tricycloundecene, 2-pentacyclopentadecene, 2-pentacyclohexadecene, 8-methyl-2-tetracyclododecene, 8-ethyl-2-tetracyclododecene, 5-acetyl-2-norbornene, 5-acetyloxy-2-norbornene, 5-methoxycarbonyl-2-norbornene, 5-ethoxycarbonyl-2-norbornene, 5-methyl-5-methoxycarbonyl-2-norbornene, 5-cyano 2-norbornene, 8-methoxycarbonyl-2-tetracyclododecene, 8-methyl-8-methoxycarbonyl-2-tetracyclododecene, and 8-cyano-2-tetracyclododecene; preferable examples are cyclopentene, cyclohexene, cyclooctane, 2-norbornene, 5-methyl-2-norbornene, 5-phenyl-2-norbornene, 2-tetracyclododecene, 2-tricyclodecene, 2-tricycloundecene, 2-pentacyclopenta decene, 2-pentacyclohexa decene, 5-acetyl-2-norbornene, 5-acetyloxy-2-norbornene, 5-methoxycarbonyl-2-norbornene, 5-methyl-5-methoxycarbonyl-2-norbornene, and 5-cyano-2-norbornene; and more preferable examples are 2-norbornene and 2-tetracyclododecene.

In the formula (II), examples of the straight chain alkyl group having 1 to about 18 carbon atoms include methyl, ethyl, n-propyl, n-butyl, and n-hexyl groups. Examples of the branched chain alkyl group having 1 to about 18 carbon atoms include isopropyl, isoamyl, tert-butyl, and 2-ethylhexyl groups. Examples of the cyclic alkyl group having 1 to about 18 carbon atoms include cyclopentyl, cyclohexyl, and dicyclopentahexyl.

Examples of the vinylidene compound (II) include isobutene, 2-methyl-1-butene, 2-methyl-1-pentene, 2-methyl-1-hexene, 2-methyl-1-heptene, 2-methyl-1-octene, 2,3-dimethyl-1-butene, 2,3-dimethyl-1-pentene, 2,3-dimethyl-1-hexene, 2,3-dimethyl-1-heptene, 2,3-dimethyl-1-octene, 2,4-dimethyl-1-pentene, 2,4,4-trimethyl-1-pentene, vinylidene chloride, etc. are mentioned, and they are isobutene, 2,3-dimethyl-1-butene, and 2,4,4-trimethyl-1-pentene; and preferable examples are isobutene, 2,3-dimethyl-1-butene, and 2,4,4-trimethyl-1-pentene.

Examples of the diene compound include 1,3-butadiene, 1,4-pentadiene, 1,5-hexadiene, 1,6-heptadiene, 1, 7-octadiene, 1,5-cyclooctadiene, 2,5-norbornadiene, dicyclopentadiene, 5-vinyl-2-norbornene, 5-allyl-2-norbornene, 4-vinyl-1-cyclohexene, and 5-ethylidene-2-norbornene; preferable examples are 1,4-pentadiene, 1,5-hexadiene, 2,5-norbornadiene, dicyclopentadiene, 5-vinyl-2-norbornene, 4-vinyl-1-cyclohexene, and 5-ethylidene-2-norbornene.

Examples of the vinyl halide include vinyl chloride.

Examples of the vinyl alkylate include vinyl acetate, vinyl propionate, and vinyl butyrate.

Examples of the vinyl ethers include methyl vinyl ether, ethyl vinyl ether, and n-butyl vinyl ether.

Examples of the acrylonitriles include acrylonitrile and methacrylonitrile.

The content of addition polymerizable structural units in the olefin-based copolymer is usually within such a range that the adhesiveness of a resulting modified product of an olefin-based copolymer is not impaired. A concrete content is preferably about 5 mol% or less relative to 100 mol% of all the structural units forming the olefin-based copolymer, more preferably 1 mol% or less, and even more preferably a content such that substantially no addition polymerizable structural unit is contained.

The method for producing the olefin-based copolymer to be used in the present invention may, for example, be a method in which it is produced in the presence of a catalyst containing a transition metal compound which has a group having an indenyl-form anion skeleton or a bridged cyclopentadiene-form anion skeleton. In particular, methods by which the production is performed in accordance with any of the methods disclosed in JP-A 2003-82028, JP-A 2003-160621 and JP-A 2000-128932 are preferable.

In the production of an olefin-based copolymer, a homopolymer of ethylene or an α-olefin (i.e., polyolefins) like polyethylene, or a homopolymer of a vinyl compound (I) may generate as by-products depending upon the kind of the catalyst used or polymerization conditions. In such a case, the copolymer of the present invention can be isolated easily by performing solvent extraction using a Soxhlet extractor, or the like. As to the solvent to be used for such extraction, for example, homopolymers of vinylcyclohexane can be removed as insoluble components in extraction using toluene, and polyolefins such as polyethylene can be removed as insoluble components in extraction using chloroform. The olefin-based copolymer can be isolated as a soluble component in both the solvents. The olefin-based copolymer may, depending upon its applications, be used while containing such by-products if no problems will occur.

The molecular weight distribution (Mw/Mn= [weight average molecular weight]/[number average molecular weight]) of the olefin-based copolymer to be used for the present invention is usually about 1.5 to about 10.0, preferably about 1.5 to about 7.0, and more preferably about 1.5 to about 5.0. It is preferable that the molecular weight distribution of the olefin-based copolymer be 1.5 to 10.0 because this tends to make cured products to be obtained improved in mechanical strength and transparency.

From the viewpoint of mechanical strength, the weight average molecular weight (Mw) of the olefin-based copolymer is usually about 5, 000 to about 1, 000, 000, preferably about 10, 000 to about 500,000, and more preferably about 15,000 to about 400,000. It is preferable that the weight average molecular weight of the olefin-based copolymer be 5,000 or more because this tends to make cured products to be obtained improved in mechanical strength, and it is preferable that the weight average molecular weight be 1, 000, 000 or less because this tends to make the olefin-based copolymer improved in fluidity.

From the viewpoint of mechanical strength, the value of the intrinsic viscosity [η] of the olefin-based copolymer to be used for the present invention is usually about 0.25 to about 10 dl/g, and preferably about 0.3 to about 3 dl/g.

It is preferable the olefin-based copolymer to be used for the present invention further have structural units derived from an unsaturated carboxylic acid compound. The structural units derived from an unsaturated carboxylic acid compound can be obtained by graft polymerizing an unsaturated carboxylic acid compound to the above-mentioned olefin-based copolymer.

Hereafter, a copolymer which is the aforementioned olefin-based copolymer further having structural units derived from an unsaturated carboxylic acid compound may be referred to as a present modified product.

The graft polymerization amount of the unsaturated carboxylic acid compound in a present modified product is usually about 0.01 to about 20% by weight, preferably about 0.05 to about 10% by weight, and more preferably about 0.1 to 5% by weight, relative to 100% by weight of the present modified product.

It is preferable that the graft polymerization amount of the unsaturated carboxylic acid compound be 0.01% by weight or more because this tends to make a cured product to be obtained have improved adhesion force, and it is preferable that the graft polymerization amount be 20% by weight or less because this tends to make a cured product to be obtained have improved thermal stability.

Examples of the unsaturated carboxylic acid compound for use in the present invention include unsaturated carboxylic acids such as acrylic acid, methacrylic acid, crotonic acid, isocrotonic acid, maleic acid, fumaric acid, itaconic acid, citraconic acid, nasic acid, methyl nasic acid, himic acid, angelic acid, tetrahydrophthalic acid, sorbic acid, and mesaconic acid;
unsaturated carboxylic acid anhydrides such as maleic anhydride, itaconic anhydride, citraconic anhydride, nasic anhydride, methyl nadic anhydride, and himic anhydride;
unsaturated carboxylic acid esters such as methyl acrylate, methyl methacrylate, ethyl acrylate, ethyl methacrylate, n-butyl acrylate, n-butyl methacrylate, isobutyl acrylate, isobutyl methacrylate, glycidyl acrylate, glycidyl methacrylate, monoethyl maleate ester, diethyl maleate ester, monomethyl fumarate ester, dimethyl fumarate ester, monomethyl itaconate ester, and dimethyl itaconate ester;
unsaturated carboxylic acid amides such as acrylamide, methacrylamide, maleic acid monoamide, maleic acid diamide, maleic acid-N-monoethylamide, maleic acid-N,N-diethylamide, maleic acid-N-monobutyramide, maleic acid-N,N-dibutylamide, fumaric acid monoamide, fumaric acid diamide, fumaric acid-N-monoethylamide, fumaric acid-N,N-diethylamide, fumaric acid-N-monobutyramide, and fumaric acid-N,N-dibutylamide;
unsaturated carboxylic acid imides such as maleimide, N-butylmaleimide, and N-phenylmaleimide;
unsaturated carboxylic acid halides such as chlorinated maleoyl; and
metal salts of unsaturated carboxylates such as sodium acrylate, sodium methacrylate, potassium acrylate, and potassium methacrylate.

The above-mentioned unsaturated carboxylic acid compounds may be used in combination.

As an unsaturated carboxylic acid compound, an unsaturated carboxylic acid anhydride is preferable and maleic anhydride is more preferable.

Examples of a method for producing a present modified product include a method in which an olefin-based copolymer is melted and then an unsaturated carboxylic acid compound is added and caused to graft polymerize, and a method in which an olefin-based copolymer is dissolved in a solvent, such as toluene and xylene, and then an unsaturated carboxylic acid compound is added and caused to graft polymerize.

The method in which an olefin-based copolymer is melted and then an unsaturated carboxylic acid compound is added and caused to graft polymerize is preferable because melt-kneading using an extruder makes it possible to use various conventional methods for mixing one resin with another resin or a resin with a solid or liquid additive. Preferable examples include a method in which all ingredients or some combinations of ingredients are mixed in a mixer, such as a Henschel mixer, a ribbon blender and a blender, to result in a uniform mixture and the mixture is melt-kneaded. As means for the melt kneading, conventional meld kneading means such as a Banbury mixer, a plastomill, a Brabender plastograph, and a single or twin screw extruder can be used. A method in which a single or twin screw extruder is used and in which an olefin-based copolymer, an unsaturated carboxylic acid and a radical initiator having been fully pre-mixed are fed through a feeding port of the extruder and then kneaded is recommended as being particularly preferable from the viewpoint of enabling continuous production to be performed and improving the productivity. The temperature of the melt-kneading section of the extruder (for example, the cylinder temperature of the extruder) is usually 50 to 300°C and preferably 80 to 270°C. It is preferable that the temperature be not lower than 50°C because the graft polymerization amount tends to increase and it is preferable that the temperature be not higher than 300°C because the decomposition of an olefin-based copolymer tends to be inhibited. As to the temperature of the extruder's section where melt kneading is performed, it is preferable to divide the melt kneading into two stages, namely, the first half and the second half, and to make the temperature of the second half higher than that of the first half. The melt kneading time is usually 0.1 to 30 minutes, and preferably 0.1 to 5 minutes. It is preferable that the melt kneading time be not less than 0.1 minutes because the graft polymerization amount tends to increase, and it is preferable that the melt kneading time be not more than 30 minutes because the decomposition of an olefin-based copolymer tends to be inhibited.

In order to graft polymerize an unsaturated carboxylic acid compound to an olefin-based polymer, the graft polymerization is carried out usually in the presence of a radical initiator.

The added amount of the radical initiator is usually 0.01 to 10 parts by weight, and preferably 0.01 to 1 part by weight relative to 100 parts by weight of the olefin-based polymer. It is preferable that the added amount be not less than 0.01 parts by weight because the graft polymerization amount to an olefin-based polymer tends to increase, so that the adhesive strength tends to increase. It is preferable that the added amount be not more than 10 parts by weight because a reduced amount of unreacted radical initiator tends to remain in a resulting modified product, so that the adhesive strength tends to be improved.

An organic peroxide is usually used as a radical initiator. Preferably, an organic peroxide is used which has a decomposition temperature of 50 to 210°C at which the half life of the organic peroxide is 1 minute. It is preferable that the decomposition temperature be not lower than 50°C because the graft polymerization amount tends to increase. It is preferable that the decomposition temperature be not higher than 210°C because the decomposition of an olefin-based polymer tends to decrease. It is preferable that such an organic peroxide have an activity of extracting a proton from an olefin-based polymer after decomposing itself to generate a radical.

Examples of the organic peroxide which has a decomposition temperature of 50 to 210°C at which the half life of the organic peroxide is 1 minute include diacyl peroxide compounds, dialkyl peroxide compounds, peroxy ketal compounds, alkyl perestesr compounds and percarbonate compounds. Specific examples include dicetyl peroxycarbonate di-3-methoxybutyl peroxydicarbonate, di-2-ethylhexyl peroxydicarbonate, bis(4-tert-butylcyclohexyl) peroxydicarbonate, diisopropyl peroxydicarbonate, tert-butylperoxyisopropyl carbonate, dimyristyl peroxydicarbonate, 1,1,3,3-tetramethylbutyl neodecanoate, α-cumylperoxy neodecanoate, tert-butyl peroxyneodecanoate, 1,1-bis(tert-butylperoxy)cyclohexane, 2,2-bis(4,4-di-tert-butylperoxycyclohexyl)propane, 1,1-bis(tert-butylperoxy)cyclododecane, tert-hexylperoxyisopropyl monocarbonate, tert-butylperoxy-3,5,5-trimethyl haxonoate, tert-butyl peroxylaurate, 2,5-dimethyl-2,5-di-(benzoylperoxy)hexane, tert-butyl peroxyacetate, 2,2-bis(tert-butylperoxy)butene, tert-butyl peroxybenzoate, n-butyl-4,4-bis(tert-peroxy)valerate, di-tert-butyl peroxyisophthalate, dicumyl peroxide, α-α'-bis(tert-butylperoxy-m-isopropyl)benzene, 2,5-dimethyl-2,5-di-(tert-butylperoxy)hexane, 1,3-bis(tert-butylperoxyisopropyl)benzene, tert-butyl cumyl peroxide, di-tert-butyl peroxide, p-menthane hydroperoxide, and 2,5-dimethyl-2,5-di-(tert-butylperoxy)hexyne-3. If the decomposition temperature at which the half life is 1 minute is lower than 50°C, the graft polymerization tends to fail to increase, and also if the decomposition temperature is higher than 210°C, the graft polymerization tends to fail to increase.

Among such organic peroxides, dialkyl peroxide compounds, diacyl peroxide compounds, percarbonate compounds and alkyl perester compounds are used preferably. The added amount of the component (C) is usually 0.01 to 20 parts by weight, and preferably 0.05 to 10 parts by weight relative to 100 parts by weight of the ethylene-vinylcyclohexane copolymer resin (A).

A present modified product is usually 1.5 to 10, preferably 1.5 to 7, and more preferably 1.5 to 5 in molecular weight distribution (Mw/Mn). It is preferable that the molecular weight distribution be not more than 10 because a cured product to be obtained tends to be improved in adhesiveness. The molecular weight distribution of the present modified product can be measured in the same manner as in the measurement of the molecular weight distribution of the olefin-based copolymer.

From the viewpoint of mechanical strength, the value of the intrinsic viscosity [η] of the present modified product is usually about 0.25 to about 10 dl/g, and preferably about 0.3 to about 3 dl/g.

Examples of the emulsifier to be used for the present invention include anion type emulsifiers such as sulfonated α-olefins, alkyl sulfates, alkyl phenyl sulfates, polyoxyethylene alkyl phenyl ether sulfates, half ester salts of polyoxyethylene alkylphenylsulfosuccinatic acids, metal salts of polyoxyethylene alkylsulfosuccinic acids, water-soluble acrylic resins and rosin soap;
nonion type emulsifiers such as polyoxyethylene alkyl phenyl ethers, polyoxyethylene polyoxypropylene block copolymers and polyoxyethylene alkyl ethers; and
cation type emulsifiers.

It is preferable that the volume-based median diameter of a dispersoid be not larger than 1 µm as mentioned later because a cured product to be obtained tends to be improved in adhesiveness. Therefore, examples of an emulsifier to be used for an emulsion containing a dispersoid having such a small diameter include water-soluble acrylic resins, polyoxyethylene polyoxypropylene block copolymers and polyoxyethylene alkyl ethers, and water-soluble acrylic resins are employed preferably.

Water-soluble acrylic resins are water-soluble resins containing structural units derived from an α,β-unsaturated carboxylic acid. Such resins are dissolved in water homogeneously.

Examples of an α,β-unsaturated carboxylic acid include acrylic acid, methacrylic acid, maleic acid, maleic anhydride, succinic acid and itaconic acid.

Examples of other monomers which constitute water-soluble acrylic resins include α,β-unsaturated carboxylic acids having 3 to 8 carbon atoms; (meth) acrylic acid esters having 4 to 18 carbon atoms such as methyl (meth) acrylate, butyl (meth)acrylate and 2-ethylhexyl (meth)acrylate; acrylic acid vinyl esters such as ethylene acrylate and ethylene methacrylate; vinyl halides such as vinyl chloride and vinyl bromide; vinylidene halides such as vinylidene chloride; vinyl compounds such as vinylphosphonic acid, vinylsulfonic acid and their salts; aromatic vinyls such as styrene, α-methylstyrene and chlorostyrene; nitriles such as (meth) acrylonitrile; acrylamides such as N-methylolacrylamide and N-butoxymethylacrylamide; conjugated dienes such as butadiene and isoprene; allyl compounds such as allyl sulfonate, diallyl phthalate, triallyl cyanurate and triallyl isocyanurate.

A water-soluble acrylic resin preferably contains structural units derived from an α,β-unsaturated carboxylic acid, structural units derived from a vinyl ester of acrylic acid, and structural units derived from a (meth)acrylic acid ester. The resin preferably contains 10 to 90 mol% of structural units derived from an α,β-unsaturated carboxylic acid, 5 to 60 mol% of structural units derived from a vinyl ester of acrylic acid, and 5 to 85 mol% of structural units derived from a (meth) acrylic acid ester relative to 100 mol% of the sum total of the structural units derived from the monomers constituting the resin.

As an emulsifier, a plurality of water-soluble acrylic resins may be used. A water-soluble acrylic resin, a polyoxyethylene polyoxypropylene block copolymer and a polyoxyethylene polyalkyl ether may also be used in combination.

The above-mentioned olefin-based copolymer or the present modified product (hereafter, they may be referred to generically as the present copolymerized material) is emulsified together with an emulsifier, so that a dispersoid composed of the present copolymerized material and the emulsifier is obtained. The volume-based median diameter of the dispersoid is usually 0.01 to 5 µm. From the viewpoint of the adhesiveness of a cured product to be obtained, the dispersoid preferably has a volume-based median diameter of 0.01 to 1 µm. An aqueous emulsion having a volume-based median diameter of 0.05 to 0.5 µm is more preferable.

Examples of the method for dispersing the present copolymerized material include (a) a method in which the present copolymerized material and an emulsifier are kneaded under a shearing stress and then dispersed in water; (b) a method in which the present copolymerized material is dissolved in an organic solvent such as toluene, mixed together with an emulsifier under a shearing stress, and then dispersed in water, followed by removal of the organic solvent; and (c) a method in which the present copolymerized material is dissolved in an organic solvent such as toluene, hexane, heptane and xylene, then mixed with an emulsifier, emulsified under high pressure, normal pressure or ultrasonic irradiation, and then the solvent is removed.

Method (a) and method (b) by which the present copolymerized material is dispersed in water under a shearing stress are preferred as the method for dispersing the present copolymerized material because the volume-based median diameter of a dispersoid is rendered 1 µm or less and, as a result, the adhesiveness of a resulting cured product tends to increase. Method (a), which does not need the removal of an organic solvent, is more preferable.

The shear rate used when the shearing stress is applied is usually about 200 to about 100000 sec⁻¹, and preferably about 1000 to about 2500 sec⁻¹. It is preferable that the shear rate be not less than 200 sec⁻¹ because the adhesiveness of a resulting emulsion tends to increase and it is preferable that the shear rate be not more than 100000 sec⁻¹ because industrial production tends to become easier.

The shear rate is a value obtained by dividing the peripheral velocity [mm/sec] of the outermost peripheral part of a screw element by the clearance [mm] between a screw and a barrel.

Examples of an apparatus for applying a shearing stress include instruments in which an aqueous emulsion is placed between a barrel (cylinder) and stirring blades and the blades are rotated to apply a shearing stress to the aqueous emulsion, e.g., multi-screw extruders such as twin screw extruders, LABO PLASTOMILL (manufactured by Toyo Seiki Seisaku-sho Ltd.) and LABO PLASTOMILL µ (manufactured by Toyo Seiki Seisaku-sho Ltd.), a homogenizer and T.K. FILMIX (manufactured by PRIMIX Corporation).

A concrete method for producing an emulsion is described below by taking a multi-screw extruder as an example. The method is, for example, a method in which a modified product of an olefin-based copolymer is fed through a hopper of the multi-screw extruder having two or more screws in its casing, heated, melt-kneaded, kneaded with an emulsifier fed through at least one liquid feeding port provided in a compression zone and/or a metering zone of the extruder, and then dispersed in water.

Examples of an instrument for applying a shearing stress other than the above-mentioned instrument include a stirring vessel, a chemical stirrer, a vortex mixer, a flow jet mixer, a colloid mill, a static mixer, a micro mixer (the foregoing apply a shearing stress by the action of only the rotation of stirring blades), an ultrasonic wave generator, a high-pressure homogenizer, and BUNSANKUN (available from Fujikin Incorporated.).

A method in which a dispersoid and an emulsifier are kneaded under a shearing stress and then dispersed in water is preferable because a desired median diameter, described below, is obtained easily. A twin screw extruder and a multi-screw extruder are preferred because they can treat highly viscous modified products. Particularly, a twin screw extruder is used preferably.

The volume-based median diameter of the dispersoid in the emulsion of the present invention is usually 0. 01 to 5 µm. From the viewpoint of improvement in the adhesiveness of a cured product to be obtained, it is preferably 0.01 to 1 µm, and particularly preferably 0.05 to 0.5 µm.

It is preferable that the volume-based median diameter be not less than 0.01 µm because the dispersoid is prepared easily and it is preferable that the volume-based median diameter be not more than 5 µm because the adhesiveness tends to increase.

The volume-based median diameter referred to herein is a particle diameter at which the value of an integrated particle diameter distribution on a volume standard is 50%.

The aqueous emulsion of the present invention contains a compound having 1 to 13, preferably 1 to 4, carbon atoms. The compound has a hydroxyl group, an amino group or both a hydroxyl group and an amino group in its molecule and has at least two hydrogen atoms each derived from a hydroxyl group or an amino group origin in its molecule.

As the aforesaid compound are preferred a compound having at least two hydroxyl groups and 1 to 4 carbon atoms in its molecule and a compound having at least two amino groups and 1 to 4 carbon atoms in its molecule. In particular, a urea compound, glycerol, 1-methyl 2-pyrrolidone, or diethylenetriamine is preferable.

Examples of the urea compound include urea compounds represented by formula (III).

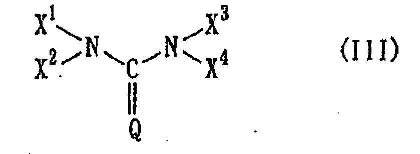

In the formula, Q represents an oxygen atom or a sulfur atom; X¹, X², X³ and X⁴ each independently represent a hydrogen atom, a straight chain alkyl group having 1 to 6 carbon atoms, a branched chain alkyl group having 3 to 6 carbon atoms, or an alkylene group having 1 to 6 carbon atoms composed of X¹ or X² linked with X³ or X⁴, and a hydrogen atom of an alkyl group and a hydrogen atom of an alkylene group each may have been substituted with a hydroxyl group.

Examples of the straight chain alkyl group having 1 to 6 carbon atoms include a methyl group and an ethyl group; examples of the branched chain alkyl group having 3 to 6 carbon atoms include an i-isopropyl group; and examples of the alkylene group having 1 to 6 carbon atoms include an ethylene group and a propylene group.

Specific examples of the urea compound include urea, methylurea, dimethylurea, thiourea, 4,5-dihydroxy-2-imidazolidinone, 1-(2-aminoethyl)-2-imidazolidinone, and mixtures containing, as a major component, 1-(2-aminoethyl)-2-imidazolidinone resulting from a deammonia reaction between diethylene triamine and urea.

Different urea compounds may be used in combination as urea compounds.

Among urea compounds, urea is preferable because it is easy to get.

The content of the compound having 1 to 13 carbon atoms is usually 0.1 to 30 parts by weight, and preferably 0.3 to 10 parts by weight relative to 100 parts by weight of the present copolymerized material. It is preferable that the content of the compound be not less than 0.1 parts by weight because the transparency of a resulting cured product tends to increase and it is preferable that the content be not more than 30 parts by weight because the adhesiveness of a resulting cured product tends to be higher.

Examples of the method for producing an aqueous emulsion containing a compound having 1 to 13 carbon atoms include a method in which the compound is mixed with a present copolymerized material, subsequently kneaded with an emulsifier under a shearing stress, and then dispersed in water to produce an aqueous emulsion of the present invention; a method in which the compound is mixed together with an emulsifier in water, kneaded with a present copolymerized material under a shearing stress, and then dispersed in water to produce an aqueous emulsion of the present invention; and a method in which an emulsifier and a present copolymerized material are kneaded under a shearing stress and subsequently dispersed in water to obtain an aqueous emulsion and then the present compound is mixed.

In the emulsion of the present invention may be incorporated, for example, aqueous emulsions such as an aqueous polyurethane emulsion and an aqueous ethylene-vinyl acetate copolymer emulsion, thermosetting resins such as a urea resin, a melamine resin and a phenol resin, fillers such as clay, kaolin, talc and calcium carbonate, antiseptics, rust preventives, defoaming agents, foaming agents, thickeners such as polyacrylic acid, polyether, methyl cellulose, carboxymethylcellulose, polyvinyl alcohol and starch, viscosity modifiers, flame retarders, pigments such as titanium oxide, high boiling solvents such as dimethyl succinate and dimethyl adipate, which are dibasic acids, and plasticizers.

In particular, when an emulsion of the present invention is applied to an adherend with low interfacial tension, such as polypropylene and polyester, it is preferable, from the viewpoint of increasing wettability, to add a silicon-based additive such as a polyether-modified polydimethylsiloxane or an acetyleneglycol-based surfactant according to necessity.

It is recommended to use a filler in order to improve the flame retardancy and the appliability exhibited at the time of adhering, and the used amount thereof is usually about 1 to about 500 parts by weight and preferably about 5 to about 200 parts by weight relative to 100 parts by weight of the solid contained in the emulsion.

Examples of the adherend which is to be adhered to an adhesive layer derived from an aqueous emulsion of the present invention include wood-based materials such as wood, plywood, MDF (medium density fiberboard), particle board and fiber board; paper-based materials such as wallpaper and wrapping paper; cellulosic materials such as cotton clothes, hemp cloth and rayon; plastic materials, e.g. polyolefins such as polyethylene (polyolefin composed mainly of structural units derived from ethylene; the same shall apply hereinafter) polypropylene (polyolefin composed mainly of structural units derived from propylene; the same shall apply hereinafter) and polystyrene, polycarbonate, acrylonitrile/butadiene/styrene copolymer (ABS resin), (meth)acrylic resin polyester, polyether, polyvinyl chloride and polyurethane; ceramic materials such as glass and pottery; and metallic materials such as iron, stainless steel, copper and aluminum.

The adherend may be a composite material made of a plurality of materials. It may also be a kneaded shaped article made of an inorganic filler such as talc, silica and activated carbon, carbon fiber or the like, and a plastic material.

When the adherend is a water absorbing material such as a wood-based material, a paper-based material and a cellulosic material, the aqueous emulsion of the present invention can be used as it is as an adhesive to be adhered to another adherend. That is, when an aqueous emulsion is applied to a water-absorbing adherend and then another adherend (this may be either capable or incapable of absorbing water) is laminated onto the layer derived from the aqueous emulsion, the water contained in the aqueous emulsion is absorbed by the water-absorbing adherend, so that the layer derived from the aqueous emulsion becomes an adhesive layer and, as a result, a laminate having the water-absorbing adherend/the adhesive layer/the other adherend can be obtained.

When both the adherends are incapable of absorbing water, a laminate can be obtained by applying an aqueous emulsion of the present invention to one side of one of the adherends, then drying it to form an adhesive layer derived from the aqueous emulsion, attaching the other adherend, and heating them to adhere.

The adhesive layer derived from an aqueous emulsion of the present invention has good adhesiveness to an adherend made of polyolefin, such as polypropylene, which has heretofore been considered as being adhesion-resisting.

Moreover, the adhesive layer also has good adhesiveness to an adherend made of polyurethane.

Thus, it has been known to use a chlorine-based polyolefin as an adhesive layer in order to adhere an adherend made of polyolefin to an adherend made of polyurethane; however, an adhesive layer derived from an aqueous emulsion of the present invention contains no chlorine and the adhesive layer itself exhibits good adhesiveness to both an adherend made of polyolefin and an adherend made of polyurethane. In particular, a laminate in which the adherend made of polyurethane is foaming polyurethane is suitable for automotive interior and exterior trims.

The polyurethane as used herein is a macromolecule crosslinked with urethane linkages and usually can be obtained through a reaction between an alcohol (-OH) and an isocyanate (-NCO). Foaming polyurethane like that shown in Examples is polyurethane which is to be foamed with carbon dioxide generated from a reaction between an isocyanate and water which is used as a crosslinking agent or a volatile solvent like Freon. Semirigid polyurethane is used for automotive interior applications and rigid polyurethane is used for coating materials.

Examples of a preferable adherend include polypropylene, polystyrene, polycarbonate, acrylonitrile/butadiene/styrene copolymer (ABS resin), polyethylene terephthalate, polyvinyl chloride, (meth)acrylic resin, glass, aluminum and polyurethane. Polypropylene, polyvinyl chloride, glass, aluminum, and polyurethane are more preferable.

The aqueous emulsion of the present invention affords a cured product having improved transparency. The cured product is excellent in adhesiveness, shapability, heat resistance, solvent resistance, and mechanical properties. The aqueous emulsion of the present invention can be used for paints or primers. In particular, when being applied onto polypropylene, which has heretofore been considered to be a adhesion-resisting material, it affords a coating material or a primer which is excellent in transparency, adhesiveness, shapability, heat resistance, solvent resistance, and mechanical properties.

### EXAMPLES

The present invention is described below in more detail on the basis of examples, but it is needless to say that the invention is not limited to the examples.

All parts and % in examples are by weight, unless otherwise stated.

The solid content was measured by the measuring method in accordance with JIS K-6828.

The viscosity is a value measured by using a Brookfield viscometer (manufactured by Toki Sangyo Co., Ltd.) at 25°C.

The median diameter is a value on the basis of a volume which is measured by using a laser diffraction/scattering particle size distribution analyzer (HORIBA, Ltd.).

The intrinsic viscosity [η] was measured at 135°C by using Tetralin as a solvent by the use of an Ubbelohde' s viscometer.

The molecular weights of olefin-based copolymers and modified products of olefin-based copolymers were determined under the conditions given below by gel permeation chromatograph (GPC) with calibration using standard polystyrenes (molecular weights of 688 to 400,000). The molecular weight distribution was evaluated by the ratio (Mw/Mn) of a weight average molecular weight (henceforth, Mw) to a number average molecular weight (henceforth, Mn).
Model: 150-C produced by Waters
Column: Shodex packed column A-80M
Measurement temperature: 140°C
Measurement solvent: Orthodichlorobenzene
Measurement concentration: 1 mg/ml

The content of vinylcyclohexane units in an olefin-based copolymer was determined using the following ¹³C-NMR apparatus.
¹³C-NMR apparatus: DRX600 produced by BRUKER
Measurement solvent: Mixed solvent of orthodichlorobenzene:benzene-d4 = 4:1 (volume ratio)
Measurement temperature: 135°C

The graft polymerization amount of maleic anhydride was determined by dissolving 1.0 g of sample in 20 ml of xylene, dropping the solution of the sample into 300 ml of methanol under stirring to reprecipitate and collect the sample, subsequently vacuum-drying the collected sample (at 80°C, for 8 hours), preparing a film of 100 µm in thickness by hot pressing, measuring the infrared absorption spectrum of the resulting film, and determining the maleic acid graft amount from the absorption near 1780 cm⁻¹.

### <Production example of olefin-based copolymer>

A SUS reactor purged with argon was charged with 386 parts of vinylcyclohexane, which may hereinafter be referred to as VCH, and 3640 parts of toluene. After the temperature was increased to 50°C, ethylene was fed while the pressure was increased from the atmospheric pressure to 0.6 MPa. Triisobutylaluminum (this may henceforth be referred to as TIBA) in the form of a toluene solution [produced by Tosoh Akzo Co., Ltd., TIBA concentration 20%] (10 parts) was charged, and then a solution prepared by dissolving 0.001 parts of diethylsilyl(tetramethylcyclopentadienyl)(3-tert-butyl-5-methyl-2-phenoxy)titanium dichloride in 87 parts of dehydrated toluene and a solution prepared by dissolving 0.03 parts of dimethylanilinium tetrakis(pentafluorophenyl)borate in 122 parts of dehydrated toluene were charged, followed by stirring for 2 hours. The resulting reaction liquid was charged into about 10000 parts of acetone and a white solid deposited was collected by filtration. The solid was washed with acetone and then dried under reduced pressure. As a result, 300 parts of an ethylene-vinylcyclohexane copolymer was obtained. The copolymer had an [η] of 0.48 dl/g, an Mn of 27, 000, a molecular weight distribution (Mw/Mn) of 2. 0, a melting point (Tm) of 62°C, a glass transition point .(Tg) of -28°C, and a content of structural units derived from VCH in the copolymer of 12.2 mol%.

### <Production example of modification of an olefin-based copolymer with an unsaturated carboxylic acid>

To 100 parts of the resulting ethylene-vinylcyclohexane copolymer were added 0.4 parts of maleic anhydride and 0.04 parts of 1,3-bis(tert-butylperoxyisopropyl)benzene, and after being fully pre-mixed, they were fed through a feeding port of a twin screw extruder and melt kneaded, so that a maleic anhydride-modified product (i.e., a present modified product) of the ethylene-vinylcyclohexane copolymer was obtained. As to the temperature of the extruder' s section where melt kneading was performed, the melt kneading was divided into two stages, namely, the first half and the second half, the first half was set at 180°C and the second half was set at an increased temperature as high as 260°C. The melt kneading was performed under such conditions, giving a present modified product. The amount of maleic acid graft polymerization of the resulting modified product of the olefin-based copolymer was 0.2%.

### <Mixing of dispersoid, emulsifier and water>

After setting a cell of a LABO PLASTOMILL µ manufactured by Toyo Seiki Seisaku-sho, Ltd. at 95°C, 3.12 g of the modified product obtained in <Production example of a modified product of olefin-based copolymer> was sealed in the cell and was agitated for 3 minutes at a rate of 300 rotations per minute. The highest shear rate detected at this time was 1173 sec⁻¹. Then, 0.46 g of ethylene oxide-propylene oxide block copolymer (weight average molecular weight 15500; PLURONIC F108, produced by ADEKA Corporation) was added as an emulsifier together with 0.21 g of water, followed by kneading for 3 minutes at a rate of 300 rotations per minute (shear rate 1173 sec⁻¹) while the temperature in the cell was kept at 95°C. After the kneading, the content was taken out and was stirred and dispersed in a container containing hot water of about 70°C, so that an emulsion containing a dispersoid with a volume-based median diameter of 0.43 µm was obtained.

### (Example 1)

Then, 100 parts (solid content 42%) of the emulsion obtained in the foregoing section <Mixing of dispersoid, emulsifier and water> and 1.6 parts of urea were stirred at a rotation rate of 500 rpm for 30 minutes, so that the urea was dissolved completely and an aqueous emulsion of the present invention was obtained.

### <Evaluation of transparency>

A cured product was obtained by applying an aqueous emulsion to a polyethylene terephthalate film of 75 µm in thickness with a bar coater so that the thickness of a resulting coating would become 10 µm after drying, and then drying the emulsion in a hot air dryer at 80°C for 5 minutes. The cured product was a coating film which was transparent entirely and which was smooth without having any foreign matter.

The transparency was evaluated in terms of opacity. The opacity is a value measured using the Hunter brightness in accordance with JIS P8123. The fact that a measured value is large means that the sample has got cloudy and is opaque. The value of Example 1 was 0.6%, which means that the sample did not get cloudy very much and was transparent.

### (Examples 2 to 4, Comparative Examples 1 to 3)

In Examples 2 to 4 and Comparative Examples 2 and 3, aqueous emulsions were prepared by mixing the compounds given in Table 1, respectively, instead of the urea used in Example 1, followed by evaluation in the same way as in Example 1. The results are shown in Table 1 with the results of Example 1.

In Comparative Example 1, a cured product was obtained in the same manner as Example 1 except for failing to mix the compounds such as urea to the emulsion obtained in the foregoing section <Mixing of dispersoid, emulsifier and water>. The results are shown in Table 1.

**Table 1**

| | Compound | Mixed parts of compound | Opacity (%) |
|---|---|---|---|
| Example 1 | Urea | 1.6 | 0.6 |
| Example 2 | Glycerol | 1.6 | 0.6 |
| Example 3 | Dithylenetriamine | 1.6 | 1.1 |
| Example 4 | 1-Methyl-2-pyrrolidone | 1.6 | 1.0 |
| Comparative Example 1 | None | 0 | 1.3 |
| Comparative Example 2 | Ethanol | 1.6 | 1.3 |
| Comparative Example 3 | Hexane | 1.6 | 1.3 |

### INDUSTRIAL APPLICABILITY

The aqueous emulsion of the present invention is possible to give a transparent cured product.

## Claims

1. An aqueous emulsion comprising an olefin-based copolymer comprising structural units derived from an α-olefin and/or ethylene and structural units derived from a vinyl compound (I) having a substituent R, an emulsifier and a compound having 1 to 13 carbon atoms, wherein the compound having 1 to 13 carbon atoms has a hydroxyl group, an amino group, or both a hydroxyl group and an amino group, and the compoud having 1 to 13 carbon ATOMS has, in the molecule thereof, at least two hydrogen atoms derived from a hydroxyl group or an amino group:
CH₂=CH-R (I)
wherein in formula (I), R represents a secondary alkyl group, a tertiary alkyl group, or an alicyclic hydrocarbon group.

2. The aqueous emulsion according to claim 1, wherein the olefin-based copolymer is an olefin-based copolymer further comprises structural units derived from an unsaturated carboxylic acid compound.

3. The aqueous emulsion according to claim 1, wherein the compound having 1 to 13 carbon atoms is a urea compound, glycerol, 1-methyl-2-pyrrolidone, or diethylenetriamine.

4. The aqueous emulsion according to claim 3, wherein the urea compound is a compound represented by the following formula (III): 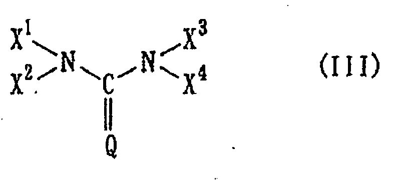 wherein Q represents an oxygen atom or a sulfur atom; X¹, X², X³ and X⁴ each independently represent a hydrogen atom, a straight chain alkyl group having 1 to 6 carbon atoms, a branched chain alkyl group having 3 to 6 carbon atoms, or an alkylene group having 1 to 6 carbon atoms composed of X¹ or X² linked with X³ or X⁴, and a hydrogen atom of an alkyl group and a hydrogen atom of an alkylene group each may have been substituted with a hydroxyl group.

5. The aqueous emulsion according to claim 1, wherein the emulsifier is at least one emulsifier selected from the group consisting of a water-soluble acrylic resin containing structural units derived from an α,β-unsaturated carboxylic acid, structural units derived from vinyl acrylate and structural units derived from a (meth)acrylic acid ester, polyoxyethylene polyoxypropylene block copolymers and polyoxyethylene alkyl ether.

6. The aqueous emulsion according to claim 1, wherein the dispersoid composed of the olefin-based copolymer having structural units derived from an α-olefin and/or ethylene and structural units derived from a vinyl compound (I)- having a substituent R and the emulsifier has a volume-based median diameter of 0.01 to 1 µm.

7. The aqueous emulsion according to any one of claims 1 to 6, wherein the vinyl compound (I) is vinylcyclohexane.

8. A cured product obtained by drying the aqueous emulsion according to claim 1.

9. A layered article obtained by laminating an adherend selected from the group consisting of a wood-based material, a cellulosic material, a plastic material, a ceramic material and a metallic material and the cured product according to claim 8.

10. The layered article according to claim 9, wherein the plastic material is polyolefin.

11. The layered article according to claim 9, wherein the plastic material is polypropylene.
